# EUROPÄISCHE PATENTSCHRIFT

(11) **EP 1 323 785 B1**
(45) Veröffentlichungstag und Bekanntmachung des Hinweises auf die Patenterteilung: **28.02.2007**
(21) Anmeldenummer: 02024732.6
(22) Anmeldetag: 06.11.2002
(51) Int. Cl.: C09D 5/03, C09D 175/16

(54) **Strahlen härtbare Pulverlackzusammensetzungen und deren Verwendung**
Radiation curable powder lacquer compositions and their use
Compositions de revêtement en poudre durcissable par rayonnement et leur utilisation

(30) Priorität: 22.12.2001 DE 10163826
(43) Veröffentlichungstag der Anmeldung: 02.07.2003
(73) Patentinhaber: Degussa GmbH, 40474 Düsseldorf (DE)
(72) Erfinder: Wenning, Andreas, Dr., 48301 Nottuln (DE); Spyrou, Emmanouil, 45772 Marl (DE); Franzmann, Giselher, Dr., 58453 Witten (DE)

(56) Entgegenhaltungen:
- EP-A- 0 702 040
- EP-A- 1 125 996
- EP-A- 1 323 758
- EP-B- 0 741 763
- US-A- 5 620 751

## Beschreibung

Die Erfindung betrifft Strahlen härtbare Pulverlackzusammensetzungen, die zu licht- und wetterstabilen Lackfilmen vernetzen.

Thermisch vernetzbare Pulverlacke sind bekannt und werden in der lackverarbeitenden Industrie häufig verwendet.

So beschreibt z. B. die DE-PS 27 35 497 PUR-Pulverlacke mit hervorragender Witterungs- und Wärmestabilität. Die Vernetzer, deren Herstellung in der DE-PS 27 12 931 beschrieben wird, bestehen aus ε-Caprolactam blockiertem Isocyanuratgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und/oder Wiedergewinnung des Blockierungsmittels getroffen werden. Zudem weisen die Vernetzer eine geringe Reaktivität auf. Es sind Härtungstemperaturen oberhalb von 170 °C erforderlich.

Beide Nachteile, Emission von Blockierungsmittel und Aushärtung bei hohen Temperaturen, können ausgeräumt werden durch Pulverlacke, die nicht thermisch, sondern durch Strahlung ausgehärtet werden. Derartige Strahlen härtbare Pulverlacke sind bekannt und z. B. in USP 3,485,732, EP 0407826, EP 0636669, WO99/14254, USP 3,974,303, USP 5,639,560 und EP 0934359 beschrieben.

Die EP 0636669 und die WO 99/14254 beschreiben zweikomponentige, Strahlen härtbare Pulverlacke auf Basis eines ungesättigten Polyesters und eines Vinylethers. Die daraus hergestellten Beschichtungen sind nicht für den Außeneinsatz geeignet, da sie stark vergilben.

Das US-Patent 3,974,303 beschreibt thermoplastische Harze, die pro 1000 g des Molekulargewichtes 0,5 bis 3,5 polymerisierbare ungesättigte Gruppen enthalten. Die beschriebenen Polyurethane (s. Beispiel 1) sind jedoch nicht wetterstabil und besitzen aufgrund fehlender Polyestergruppen und geringer Kettenlänge eine geringe Flexibilität.

Das US-Patent 5,639,560 beschreibt Strahlen härtbare Pulverlackzusammensetzungen mit speziellen kristallinen Polyestern, die außerdem Methacrylendgruppen aufweisen, als Bindemittel. Fakultativ enthalten diese Pulverlackzusammensetzungen ethylenisch ungesättigte Oligomere, u. a. Urethanacrylate, in untergeordneten Mengen, bevorzugt bis zu 10 Gewichtsprozent. Die in diesem Patent vorgestellten Strahlen härtbaren Pulverlackformulierungen haben aber wesentliche Nachteile. Sie sind nur bei minus 80 °C mahlbar und in der Regel sind die daraus resultierenden Beschichtungen entweder nicht außenwetterstabil oder nicht flexibel. Besonders gravierend ist der Nachteil einer sehr geringen Pendelhärte (nach König) von unter 120 s.

Die EP 0934359 beschreibt pulverförmige Strahlen härtbare Mischungen aus amorphen und kristallinen Polyestern mit terminalen Methacrylatgruppen. Diese daraus hergestellten Pulverlacke besitzen zwar eine höhere Glasübergangstemperatur als die kristallinen Methacrylate der US 5,639,560. Sie müssen jedoch weiterhin unter Kühlung gemahlenen werden. Zudem sind Härte und Haftung der Beschichtungen nur befriedigend.

Aufgabe der vorliegenden Erfindung war es, Strahlen härtbare Pulverlackzusammensetzungen zu finden, die lagerstabil bei 35°C sind und außerdem nach der Aushärtung der Lackfilme zu gleichzeitig harten wie flexiblen und außenwetterstabilen Beschichtungen mit hoher Haftung rühren. Außerdem sollen die Pulverlacke mit wenig oder ohne Kühlmittel mahlbar sein.

Überraschend konnte diese Aufgabe durch eine Strahlen härtbare Pulverlackzusammensetzung gelöst werden, die als Bindemittel mindestens ein amorphes Urethanacrylat mit einem Glasübergangspunkt (Tg) der Mischung von mindestens 35 °C und einem Schmelzpunkt von 50 - 120 °C enthält.

Gegenstand der Erfindung sind Strahlen härtbare Pulverlackzusammensetzungen enthaltend
I. ein Bindemittel bestehend aus
   mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
   I.1) mindestens ein amorpher Hydroxylgruppen haltiger Polyester mit einer Glasübergangstemperatur von 35 - 80 °C und einer Säurezahl von < 5 mg KOH/g, wobei der Polyester aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
      und
   mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
   I.2) mindestens ein Polyisocyanat;
   I.3) mindestens eine Verbindung mit mindestens einer Alkoholgruppe und mindestens einer polymerisationsfähigen Acrylatgruppe;
   und
II. Hilfs- und Zusatzstoffe.

Ebenfalls Gegenstand der Erfindung ist die Verwendung von Zusammensetzungen enthaltend
I. ein Bindemittel bestehend aus mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
   I.1) mindestens ein amorpher Hydroxylgruppen haltiger Polyester mit einer Glasübergangstemperatur von 35 - 80 °C und einer Säurezahl von < 5 mg KOH/g, wobei der Polyester 1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
      und
      mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
   I.2) mindestens ein Polyisocyanat;
   I.3) mindestens eine Verbindung mit mindestens einer Alkoholgruppe und mindestens einer polymerisationsfähigen Acrylatgruppe;
      und
II. Hilfs- und Zusatzstoffe, zur Herstellung von Strahlen härtbaren Pulverlackzusammensetzungen.

Weiterer Gegenstand der Erfindung ist ein Verfahren zur Herstellung von Strahlen härtbaren Pulverlackzusammensetzungen
enthaltend
I. ein Bindemittel bestehend aus mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
   I.1) mindestens ein amorpher Hydroxylgruppen haltiger Polyester mit einer Glasübergangstemperatur von 35 - 80 °C und einer Säurezahl von < 5 mg KOH/g, wobei der Polyester 1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
      und
      mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
   I.2) mindestens ein Polyisocyanat;
   I.3) mindestens eine Verbindung mit mindestens einer Alkoholgruppe und mindestens einer polymerisationsfähigen Acrylatgruppe;
      und
II. Hilfs- und Zusatzstoffe,
   bei Einhaltung einer Temperaturobergrenze zwischen 120 °C und 130 °C, in beheizbaren Knetern, insbesondere Extrudern.

Gegenstand der Erfindung ist auch ein Verfahren zur Herstellung von Beschichtungen durch Verwendung von Strahlen härtbaren Pulverlackzusammensetzungen enthaltend
I. ein Bindemittel bestehend aus mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
   I.1) mindestens ein amorpher Hydroxylgruppen haltiger Polyester mit einer Glasübergangstemperatur von 35 - 80 °C und einer Säurezahl von < 5 mg KOH/g, wobei der Polyester 1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
      und
      mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
   I.2) mindestens ein Polyisocyanat;
   I.3) mindestens eine Verbindung mit mindestens einer Alkoholgruppe und mindestens einer polymerisationsfähigen Acrylatgruppe;
   und
II. Hilfs- und Zusatzstoffe.

Urethanacrylate im Sinne dieser Erfindung bestehen aus einem Hydroxylgruppen haltigen Polyester, an den durch Umsetzung mit Polyisocyanaten und acrylathaltigen Alkoholen Urethangruppen und Acrylatgruppen angebunden werden. Sie weisen einen Tg von mindestens 35 °C und einen Schmelzpunkt von 50 bis 120 °C auf.

Die erfindungsgemäßen amorphen Urethanacrylate werden aus amorphen Hydroxylgruppen haltigen Polyestern (I.1) mit einem Tg von 35 - 80 °C durch Umsetzung mit Polyisocyanaten (I.2) und einer Verbindung, die gleichzeitig mindestens eine Alkoholgruppe und mindestens eine polymerisationsfähige Acrylatgruppe (I.3) enthält, hergestellt. Sie weisen ebenso Urethangruppen wie endständige Acrylatgruppen auf.

Die amorphen Hydroxylgruppen haltigen Polyester I.1 mit einem Tg von 35 - 80 °C werden hergestellt durch Polykondensation von geeigneten Dicarbonsäuren und Diolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern eingesetzten Carbonsäuren sind Isophthalsäure, Terephthalsäure, Hexahydroterephthalsäure und 1,4-Cyclohexandicarbonsäure.

Als Polyole kommen Monoethylenglykol, Butandiol, Hexandiol, Neopentylglykol, Dicidol, Cyclohexandimethanol, Trimethylolpropan und Glycerin in frage.

Eine nachträgliche bzw. zusätzliche Verzweigung der Polyester mit Polyisocyanaten ist möglich. In derartigen Fällen lässt sich z. B. das Isophorondiisocyanato-Isocyanurat vorteilhaft verwenden.

So hergestellte amorphe Polyester haben eine OH-Zahl von 15 - 150 mg KOH/g, einen Tg von 35 - 80 °C und eine Säurezahl von < 5 mg KOH/g. Es können auch Gemische von amorphen Polyestern eingesetzt werden.

In den amorphen Urethanacrylaten werden als Polyisocyanate I.2 Diisocyanate aliphatischer, (cyclo)aliphatischer oder cycloaliphatischen Struktur eingesetzt. Repräsentative Beispiele der Polyisocyanate sind 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomere, 4,4'-Methylen-bis(cyclohexylisocyanat), Norbomandiisocyanat, und 3,3,5-Trimethyl-1-isocyanato-3-isocyanatomethylcyclohexan (IPDI). Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen. Die Polyisocyanate können ebenfalls Biuret- oder Allophanatgruppen enthalten. Besonders gut geeignet ist IPDI.

Als polymerisationsfähige Verbindungen I.3 mit mindestens einer freien OH-Gruppe und einer polymerisationsfähigen Acrylatgruppe kommen z. B. Hydroxyethylacrylat (HEA), Hydroxypropylacrylat und Glycerindiacrylat in Frage. Besonders gut geeignet ist Hydroxyethylacrylat (HEA).

Zur Herstellung des amorphen Urethanacrylats aus den amorphen OH-haltigen Polyestern I.1, Polyisocyanaten I.2 und Verbindungen I.3 wird zunächst das Polyisocyanat vorgelegt, mit DBTL als Katalysator und IONOL CP (Shell) als Polymerisationsinhibitor versetzt und in einem Verhältnis NCO:OH von 2,5 - 1,5:1 der Polyester zugegeben. Nach beendeter Zugabe wird die Reaktion bei 100 - 140 °C vervollständigt. Danach wird zum Reaktionsprodukt die Komponente I.3, z. B. Hydroxyethylacrylat im Verhältnis Rest-NCO:OH von 1,0 - 1,1:1 gegeben und die Reaktion bei 80 - 140 °C vervollständigt, so dass ein NCO-Gehalt unter 0,1 % erreicht wird. Auch möglich ist eine Vorreaktion eines Polyisocyanats, z. B. IPDI, mit der Komponente I.3 und die Zugabe dieses NCO-haltigen Vorproduktes zum Hydroxylgruppen haltigen Polyester.

Zur Strahlenhärtung der erfindungsgemäßen Pulverlackzusammensetzung sind beschleunigte Elektronenstrahlen geeignet. Die Elektronenstrahlung generiert aus der Pulverlackzusammensetzung freie Radikale in einer Anzahl, die eine extrem schnelle Polymerisation der reaktiven Acrylatgruppen gewährleistet. Bevorzugt werden Strahlungsdosen von 5 bis 15 Mrad verwendet.

Im Falle der UV-Härtung werden als weitere erforderliche Einsatzstoffe UV-Initiatoren verwendet, die prinzipiell bekannt sind aus herkömmlichen flüssigen UV-härtenden Systemen, z. B. EP 633912. Dies sind Stoffe, die bei Bestrahlung mit UV-Licht in Radikale zerfallen und damit die Polymerisation starten. Als UV-Initiatoren kommen in Frage z. B. 2,2'-Diethoxyacetophenon, Hydroxycyclohexylphenylketon, Benzophenon, 2-Hydroxy-2-methyl-1-phenylpropan-1-on, Xanthon, Thioxanthon, Benzildimethylketal, usw. Solche UV-Initiatoren werden kommerziell angeboten, z.B. IRGACURE 184 oder DEGACURE 1173 von Ciba. Der Anteil des Photoinitiators am Gesamtsystem beträgt etwa 0,5 bis 5 Gew.-%.

Der Einsatz von Initiatoren, z. B. Thioxanthone, Phosphinoxide, Metallocene, tertiäre Aminobenzole oder tertiäre Aminobenzophenone, die bei Bestrahlung mit sichtbarem Licht in Radikale zerfallen, ist ebenso möglich.

Optionale Zusatzstoffe sind acrylat- oder methacrylathaltige Verbindungen, wie z. B. das Triacrylat von Tris(2-hydroxyethyl)isocyanurat (SR 386, Sartomer), und Haftvermittler, die in untergeordneten Anteilen von 0 - 20 Gew.-% eingesetzt werden können, um die Beschichtungseigenschaften zu modifizieren.

Weitere bei Pulverlacken übliche Zusatzstoffe sind Verlaufmittel, Lichtstabilisatoren, und Entgasungsmittel. Diese können in 0 - 5 Gew.-% verwendet werden. Außerdem möglich ist der Einsatz von Pigmenten und Füllern, z. B. Metalloxide wie Titandioxid, und Metallhydroxide, Sulfate, Sulfide, Carbonate, Silicate, Talkum, Ruß usw. in Gewichtsanteilen von 0 - 40 %.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 120 - 130 °C nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintern erfolgen. Geeignete Substrate sind z. B. unbehandelte oder vorbehandelte metallische Substrate, Holz, Holzwerkstoffe, Kunststoffe, Glas oder Papier.

Die aus den erfindungsgemäßen Pulverlackzusammensetzungen hergestellten Beschichtungen sind licht- und wetterstabil, flexibel, hart und besitzen eine gute Haftung. Gegenstand der Erfindung ist auch die Verwendung der Strahlen härtbaren zur Herstellung von Beschichtungen sowie ein Verfahren zur Herstellung von Beschichtungen durch Verwendung der Pulverlackzusamensetzungen.

Die Erfindung wird durch die folgenden Beispiele näher erläutert:

### Beispiele:

### 1. Herstellvorschrift des amorphen Hydroxylgruppen haltigen Polyesters

Säurekomponenten und Alkoholkomponenten werden mit 0,2 Massenprozente n-Butylzinntrioctonoat versetzt und in einer mit einer Destillationskolonne versehenen Apparatur unter Stickstoff und Rühren auf 190 °C erhitzt. Diese Temperatur wird im Laufe der Wasserabscheidung langsam auf 230 °C erhöht. Nachdem etwa 98 % der theoretischen Wassermenge abdestilliert worden sind, wird das Produkt abgekühlt und auf OH-Zahl (OHZ in mg KOH/g) und Säure-Zahl (SZ in mg KOH/g) geprüft.
Auf diese Weise wurden folgender Polyester hergestellt:
A1: Amorpher Polyester aus IPS 100 %, MEG 20 %, CHDM 40 % und NPG 40 %, OHZ 41 mg KOH/g, SZ 0,5 mg KOH/g, Tg 53 °C
IPS: Isophthalsäure, MEG: Monoethylenglykol, CHDM: 1,4-Cylohexandimethanol, NPG: Neopentylglykol

### 2. Herstellung des amorphen Urethanacrylates A1U

260,0 g des Polyesters A1 (OHZ 41) werden aufgeschmolzen und bei 120 °C portionsweise unter kräftigen Rühren zu einer Mischung aus 83,3 g eines 1 : 1-Adduktes aus IPDI und Hydroxyethylacrylat, 0,7 g IONOL CP und 0,2 g DBTL gegeben. Nach etwa einer Stunde Rühren liegt der NCO-Gehalt unter 0,1 % und die heiße Reaktionsmischung wird aus dem Kolben auf eine Folie gegossen. Sobald die Reaktionsmasse erstarrt und abgekühlt ist, wird sie mechanisch zerkleinert und gemahlen. Der TG dieses Produktes beträgt 45 °C.

### 3. Herstellung der erfindungsgemäßen Polymere und Pulverlackzusammensetzungen der Beispiele 1 bis 2 und des Vergleichsversuchs Z

100 Teile des amorphen Urethanacrylates A1U werden mit 0,7 Teilen BYK 361 (Verlaufmittel, BYK Chemie), 1,0 Teilen Worlée Add 900 (Entgasungsmittel, Worlée-Chemie) und 1 Teil EBECRYL 170 (Haftvermittler, UCB) versetzt. Die zerkleinerten Einsatzstoffe werden in einem Kollergang innig vermischt und anschließend im Extruder bis maximal 130 °C homogenisiert. Nach dem Erkalten wird das Extrudat gebrochen und mit einer Stiftsmühle im Falle des Vergleichsversuchs mit und im Falle des erfindungsgemäßen Beispiels ohne Zusatz von Kühlmitteln (flüssiger Stickstoff oder Trockeneis) auf eine Korngröße < 100 µm gemahlen. Das so hergestellte Pulver wird mit einer elektrostatischen Pulverspritzanlage bei 60 KV auf entfettete, ggf. vorbehandelte Aluminiumbleche und auf MDF-Platten (Mitteldichte Faserplatten) appliziert. Dann wird unter IR-Bestrahlung aufgeschmolzen und mit Hilfe von Elektronenstrahlen (15 MRad) ausgehärtet.

### 4. Vergleichsbeispiel Z

Für das Vergleichsbeispiel Z wurde die folgende Rezeptur eingesetzt:
300 g UVECOAT 2100 (UCB Chemicals)
86 g UVECOAT 9010 (UCB Chemicals)
8 g IRGACURE 184 (Ciba Specialty Chemicals)
4 g RESIFLOW PV 5 (Worlée-Chemie)
2 g WORLEE Add 900 (Worlée-Chemie)

Die Prüfwerte sind in der Tabelle 1 zusammengefasst:

**Tabelle 1**

| *Versuch* | *A1U* | *Substrat* | *Mahlbar ohne K.¹* | *HK² [sec]* | *ET³ [mm]* | *GS⁴* |
|---|---|---|---|---|---|---|
| 1 | 100 | Aluminium | Ja | 228 | 6,5 | 0 |
| 2 | 100 | MDF | Ja | 204 | - | 0 |
| Vergleich Z | | Normalstahl | Nein | 88 | 6,5 | 0 |

| | | | | | | |
|---|---|---|---|---|---|---|
| 1: Mahlbarkeit ohne Einsatz von Kühlmittel 2: Härte nach König (DIN 53 157) 3: Erichsentiefung (DIN 53 156) 4: Gitterschnitt (DIN 53153, ISO 2409) (Skala 0 (kein Haftungsverlust) bis 5 (totaler Haftungsverlust)) | | | | | | |

Lediglich die erfindungsgemäßen Versuche 1 und 2 sind mahlbar ohne Zusatz von Kühlmittel und zeigen außerdem in der Beschichtung gleichzeitig hohe Härte, Flexibilität und exzellente Haftung. Das nicht erfindungsgemäße Vergleichsbeispiel Z weist insbesondere Schwächen in der Mahlbarkeit des Pulvers sowie in der Härte der Beschichtung auf.

## Patentansprüche

1. Strahlen härtbare Pulverlackzusammensetzung enthaltend
I. ein Bindemittel bestehend aus mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
I.1) mindestens ein amorpher Hydroxylgruppen haltiger Polyester mit einer Glasübergangstemperatur von 35 - 80 °C und einer Säurezahl von < 5 mg KOH/g, wobei der Polyester I.1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
I.2) mindestens ein Polyisocyanat;
I.3) mindestens eine Verbindung mit mindestens einer Alkoholgruppe und mindestens einer polymerisationsfähigen Acrylatgruppe;
und
II. Hilfs- und Zusatzstoffe.

2. Strahlen härtbare Pulverlackzusammensetzung nach Anspruche 1,
**dadurch gekennzeichnet,**
**dass** als Polyisocyanat I.2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbornandiisocyanat allein oder in Mischungen oder Folgeprodukte dieser Diisocyanate, wie Isocyanurate, Allophanate oder Biurete, eingesetzt wird.

3. Strahlen härtbare Pulverlackzusammensetzung nach mindestens einem der Ansprüche 1 bis 2,
**dadurch gekennzeichnet,**
**dass** als Komponente I.3 Hydroxyethylacrylat eingesetzt wird.

4. Strahlen härtbare Pulverlackzusammensetzung nach mindestens einem der Ansprüche 1 bis 3,
**dadurch gekennzeichnet,**
**dass** als Hilfs- und Zusatzstoffe UV-Initiatoren, Verlaufmittel, Lichtstabilisatoren, Entgasungsmittel, Pigmente, Füllstoffe, Haftvermittler oder weitere acrylat- und/oder methacrylathaltige Verbindungen enthalten sind.

5. Verwendung von Zusammensetzungen enthaltend
I. ein Bindemittel bestehend aus
mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
I.1) mindestens ein amorpher Hydroxylgruppen haltiger Polyester mit einer Glasübergangstemperatur von 35 - 80 °C und einer Säurezahl von < 5 mg KOH/g, wobei der Polyester 1.1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
I.2) mindestens ein Polyisocyanat;
I.3) mindestens eine Verbindung mit mindestens einer Alkoholgruppe und mindestens einer polymerisationsfähigen Acrylatgruppe;
und
II. Hilfs- und Zusatzstoffe,
zur Herstellung von Strahlen härtbaren Pulverlackzusammensetzungen.

6. Verwendung nach Anspruche 5,
**dadurch gekennzeichnet,**
**dass** als Polyisocyanat I.2 Isophorondiisocyanat, Hexamethylendiisocyanat, Trimethylhexamethylendiisocyanat, Dicyclohexylmethyldiisocyanat oder 2,2,6-Trimethyl-1,4-diisocyanatocyclohexan, Norbomandiisocyanat allein oder in Mischungen oder Folgeprodukte dieser Diisocyanate, wie Isocyanurate, Allophanate oder Biurete, eingesetzt werden.

7. Verwendung nach mindestens einem der Ansprüche 5 bis 6,
**dadurch gekennzeichnet,**
**dass** als Komponente I.3 Hydroxyethylacrylat eingesetzt wird.

8. Verwendung nach mindestens einem der Ansprüche 5 bis 7,
**dadurch gekennzeichnet,**
**dass** als Hilfs- und Zusatzstoffe, Verlaufmittel, Lichtstabilisatoren, Entgasungsmittel, Pigmente, Füllstoffe, Haftvermittler oder weitere acrylat- und/oder methacrylathaltige Verbindungen enthalten sind.

9. Verwendung der Strahlen härtbaren Pulverlackzusammensetzungen nach mindestens einem der Ansprüche 5 bis 8 zur Herstellung von Beschichtungen.

10. Verwendung der Strahlen härtbaren Pulverlackzusammensetzungen nach mindestens einem der Ansprüche 5 bis 9 zur Herstellung von licht- und wetterstabilen, flexiblen, harten sowie gut haftenden Beschichtungen.

11. Verfahren zur Herstellung von Strahlen härtbaren Pulverlackzusammensetzungen enthaltend
I. ein Bindemittel bestehend aus
mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
I.1) mindestens ein amorpher Hydroxylgruppen haltiger Polyester mit einer Glasübergangstemperatur von 35 - 80 °C und einer Säurezahl von < 5 mg KOH/g,
wobei der Polyester I.1 aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
I.2) mindestens ein Polyisocyanat;
I.3) mindestens eine Verbindung mit mindestens einer Alkoholgruppe und mindestens einer polymerisationsfähigen Acrylatgruppe;
und
II. Hilfs- und Zusatzstoffe,
bei Einhaltung einer Temperaturobergrenze zwischen 120 °C und 130 °C, in beheizbaren Knetern.

12. Verfahren nach Anspruch 11,
**dadurch gekennzeichnet,**
**dass** als Einsatzstoffe Verbindungen nach mindestens einem der Ansprüche 2 bis 4 eingesetzt werden.

13. Verfahren zur Herstellung von Beschichtungen durch Verwendung von Strahlen härtbaren Pulverlackzusammensetzungen
enthaltend
I. ein Bindemittel bestehend aus mindestens einem amorphen Urethanacrylat mit einer Glasübergangstemperatur von mindestens 35 °C und einem Schmelzpunkt von 50 bis 120 °C, das amorphe Urethanacrylat durch Reaktion der folgenden Komponenten aufgebaut ist:
I.1) mindestens ein amorpher Hydroxylgruppen haltiger Polyester mit einer Glasübergangstemperatur von 35 - 80 °C und einer Säurezahl von < 5 mg KOH/g, wobei der Polyester aufgebaut ist aus mindestens einer monomeren Dicarbonsäure, ausgewählt aus Isophthalsäure, Terephthalsäure, Hexahydroterephthalsäure und 1,4-Cyclohexandicarbonsäure
und
mindestens einem monomeren Polyol, ausgewählt aus Monoethylenglykol, Butandiol, Hexandiol, Neopentylglykol, Dicidol, Cyclohexandimethanol, Trimethylolpropan und Glycerin;
I.2) mindestens ein Polyisocyanat;
I.3) mindestens eine Verbindung mit mindestens einer Alkoholgruppe und mindestens einer polymerisationsfähigen Acrylatgruppe;
und
II. Hilfs- und Zusatzstoffe.

14. Verfahren nach Anspruch 13,
**dadurch gekennzeichnet,**
**dass** als Ausgangskomponenten die Verbindungen nach mindestens einem der Ansprüche 2 bis 4 verwendet werden.

15. Verfahren nach Anspruch 11 oder 12, in beheizbaren Extrudern.

## Claims

1. Radiation curable powder coating compositions comprising
I. a binder composed of
at least one amorphous urethane acrylate having a glass transition temperature of at least 35°C and a melting point of from 50 to 120°C;
the amorphous urethane acrylate is synthesized by reacting the following, components:
I.1) at least one amorphous hydroxyl-containing polyester having a glass transition temperature of 35-80°C and an acid number of < 5 mg KOH/g,
wherein the polyester I.1 is composed of at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, Dicidol, cyclohexanedimethanol, trimethylolpropane, and glycerol;
I.2) at least one polyisocyanate,
I.3) at least one compound containing at least one alcohol group and at least one polymerizable acrylate group,
and
II. auxiliaries and additives.

2. Radiation curable powder coating compositions according to Claim 1, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or derivatives of these diisocyanates, such as isocyanurates, allophanates or biurets, is or are used as polyisocyanate I.2.

3. Radiation curable powder coating compositions according to at least one of Claims 1 to 2, **characterized in that** hydroxyethyl acrylate is used as component I.3.

4. Radiation curable powder coating compositions according to at least one of Claims 1 to 3, **characterized in that** UV initiators, leveling agents, light stabilizers, devolatilizers, pigments, fillers, adhesion promoters or further acrylate-containing and/or methacrylate-containing compounds are present as auxiliaries and additives.

5. Use of compositions comprising
I. a binder composed of
at least one amorphous urethane acrylate having a glass transition temperature of at least 35°C and a melting point of 50-120°C the amorphous urethane acrylate is synthesized by reacting the following components:
I.1) at least one amorphous hydroxyl-containing polyester having a glass transition temperature of 35-80°C and an acid number of < 5 mg KOH/g,
wherein the polyester I.1 is composed of at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, Dicidol, cyclohexanedimethanol, trimethylolpropane, and glycerol;
I.2) at least one polyisocyanate,
I.3) at least one compound containing at least one alcohol group and at least one polymerizable acrylate group,
and
II. auxiliaries and additives,
for producing radiation curable powder coating compositions.

6. Use according to Claim 5, **characterized in that** isophorone diisocyanate, hexamethylene diisocyanate, trimethylhexamethylene diisocyanate, dicyclohexylmethyl diisocyanate or 2,2,6-trimethyl-1,4-diisocyanatocyclohexane, norbornane diisocyanate, alone or in mixtures, or derivatives of these diisocyanates, such as isocyanurates, allophanates or biurets, **characterized in that** are used as polyisocyanate I.2.

7. Use according to at least one of Claims 5 to 6, **characterized in that** hydroxyethyl acrylate is used as component I.3.

8. Use according to at least one of Claims 5 to 7, **characterized in that** leveling agents, light stabilizers, devolatilizers, pigments, fillers, adhesion promoters or further acrylate-containing and/or methacrylate-containing compounds are present as auxiliaries and additives.

9. Use of radiation curable powder coating compositions according to at least one of Claims 5 to 8 for producing coatings.

10. Use of radiation curable powder coating compositions according to at least one of Claims 5 to 9 for producing light-stable and weathering-stable, flexible, hard and well-adhering coatings.

11. Process for producing radiation curable powder coating compositions comprising
I. a binder composed of
at least one amorphous urethane acrylate having a glass transition temperature of 35°C and a melting point of 50-120°C
the amorphous urethane acrylate is synthesized by reacting the following components:
I.1) at least one amorphous hydroxyl-containing polyester having a glass transition temperature of 35-80°C and an acid number of < 5 mg KOH/g,
wherein the polyester I.1 is composed of at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, dicidol, cyclohexanedimethanol, trimethylolpropane, and glycerol;
I.2) at least one polyisocyanate,
I.3) at least one compound containing at least one alcohol group and at least one polymerizable acrylate group, and
II. auxiliaries and additives,
observing an upper temperature limit of between 120°C and 130°C, in heatable kneading devices.

12. Process according to Claim 11, **characterized in that** compounds according to at least one of Claims 2 to 4 are used as ingredients.

13. Process for producing coatings by using radiation curable powder coating compositions comprising
I. a binder composed of
at least one amorphous urethane acrylate having a glass transition temperature of at least 35°C and a melting point of from 50 to 120°C
the amorphous urethane acrylate is synthesized by reacting the following components:
I.1) at least one amorphous hydroxyl-containing polyester having a glass transition temperature of 35-80°C and an acid number of < 5 mg KOH/g,
wherein the polyester I.1 is composed of at least one monomeric dicarboxylic acid selected from isophthalic acid, terephthalic acid, hexahydroterephthalic acid, and 1,4-cyclohexanedicarboxylic acid
and
at least one monomeric polyol selected from monoethylene glycol, butanediol, hexanediol, neopentyl glycol, dicidol, cyclohexanedimethanol, trimethylolpropane, and glycerol;
I.2) at least one polyisocyanate,
I.3) at least one compound containing at least one alcohol group and at least one polymerizable acrylate group;
and
II. auxiliaries and additives.

14. Process according to Claim 13, **characterized in that** compounds according to at least one of Claims 2 to 4 are used as starting components.

15. Process according to Claim 11 or 12, in heatable extruders.

## Revendications

1. Composition de peinture en poudre durcissable sous l'effet d'un rayonnement, contenant:
I. un liant, constitué
d'au moins un acrylate d'uréthanne amorphe, ayant une température de transition vitreuse d'au moins 35°C et un point de fusion de 50 à 120°C,
l'acrylate d'uréthanne amorphe étant obtenu par réaction des composés suivants:
I.1) au moins un polyester amorphe contenant des groupes hydroxyle, ayant une température de transition vitreuse de 35 à 80°C et un indice d'acide < 5 mg KOH/g, le polyester I.1 étant obtenu à partir d'au moins un acide dicarboxylique monomère choisi parmi l'acide isophtalique, l'acide téréphtalique, l'acide hexahydrotéréphtalique et l'acide 1,4-cyclohexanedicarboxylique,
et
au moins un polyol monomère, choisi parmi le monoéthylèneglycol, le butanediol, l'hexanediol, le néopentylglycol, le dicidol, le cyclohexanediméthanol, le triméthylolpropane et le glycérol ;
I.2) au moins un polyisocyanate ;
I.3) au moins un composé ayant au moins un groupe alcool et au moins un groupe acrylate polymérisable ; et
II. des auxiliaires et des additifs.

2. Composition de peinture en poudre durcissable sous l'effet d'un rayonnement selon la revendication 1, **caractérisée en ce qu'**on utilise en tant que polyisocyanate I.2 le diisocyanate d'isophorone, le diisocyanate d'hexaméthylène, le diisocyanate de triméthylhexaméthylène, le diisocyanate de dicyclohexylméthyle ou le 2,2,6-triméthyl-1,4-diisocyanatocyclohexane, le diisocyanate de norbornane, seul ou en mélange, ou des dérivés de ces diisocyanates tels que les isocyanurates, les allophanates ou les biurets.

3. Composition de peinture en poudre durcissable sous l'effet d'un rayonnement selon au moins l'une des revendications 1 à 2, **caractérisée en ce qu'**on utilise en tant que composant 1.3 de l'acrylate d'hydroxyéthyle.

4. Composition de peinture en poudre durcissable sous l'effet d'un rayonnement selon au moins l'une des revendications 1 à 3, **caractérisée en ce qu'**elle contient en tant qu'auxiliaires et additifs des amorceurs UV, des agents d'étalement, des agents de stabilisation contre la lumière, des agents de dégazage, des pigments, des charges, des promoteurs d'adhérence, ou d'autres composés contenant des groupes acrylate et/ou méthacrylate.

5. Utilisation de compositions contenant
I. un liant, constitué
d'au moins un acrylate d'uréthanne amorphe, ayant une température de transition vitreuse d'au moins 35°C et un point de fusion de 50 à 120°C,
l'acrylate d'uréthanne amorphe étant obtenu par réaction des composés suivants:
I.1) au moins un polyester amorphe contenant des groupes hydroxyle, ayant une température de transition vitreuse de 35 à 80°C et un indice d'acide < 5 mg KOH/g, le polyester I.1 étant obtenu à partir d'au moins un acide dicarboxylique monomère choisi parmi l'acide isophtalique, l'acide téréphtalique, l'acide hexahydrotéréphtalique et l'acide 1,4-cyclohexanedicarboxylique,
et
au moins un polyol monomère, choisi parmi le monoéthylèneglycol, le butanediol, l'hexanediol, le néopentylglycol, le dicidol, le cyclohexanediméthanol, le triméthylolpropane et le glycérol ;
I.2) au moins un polyisocyanate ;
I.3) au moins un composé ayant au moins un groupe alcool et au moins un groupe acrylate polymérisable ; et
II. des auxiliaires et des additifs,
pour fabriquer des compositions de peinture en poudre durcissables sous l'effet d'un rayonnement.

6. Utilisation selon la revendication 5, **caractérisée en ce qu'**on utilise en tant que polyisocyanate I.2 le diisocyanate d'isophorone, le diisocyanate d'hexaméthylène, le diisocyanate de triméthylhexaméthylène, le diisocyanate de dicyclohexylméthyle ou le 2,2,6-triméthyl-1,4-diisocyanatocyclohexane, le diisocyanate de norbornane, seul ou en mélange, ou des dérivés de ces diisocyanates tels que les isocyanurates, les allophanates ou les biurets.

7. Utilisation selon au moins l'une des revendications 5 à 6, **caractérisée en ce qu'**on utilise en tant que composant I.3 de l'acrylate d'hydroxyéthyle.

8. Utilisation selon au moins l'une des revendications 5 à 7, **caractérisée en ce qu'**elle contient en tant qu'auxiliaires et additifs, des agents d'étalement, des agents de stabilisation contre la lumière, des agents de dégazage, des pigments, des charges, des promoteurs d'adhérence, ou d'autres composés contenant des groupes acrylate et/ou méthacrylate.

9. Utilisation des compositions de peinture en poudre durcissables sous l'effet d'un rayonnement selon au moins l'une des revendications 5 à 8, pour fabriquer des revêtements.

10. Utilisation des compositions de peinture en poudre durcissables sous l'effet d'un rayonnement selon au moins l'une des revendications 5 à 9, pour fabriquer des revêtements stables à la lumière et aux intempéries, souples, dures et bien adhérentes.

11. Procédé de fabrication de compositions de peinture en poudre durcissables sous l'effet d'un rayonnement, contenant
I. un liant, constitué
d'au moins un acrylate d'uréthanne amorphe, ayant une température de transition vitreuse d'au moins 35°C et un point de fusion de 50 à 120°C,
l'acrylate d'uréthanne amorphe étant obtenu par réaction des composés suivants :
I.1) au moins un polyester amorphe contenant des groupes hydroxyle, ayant une température de transition vitreuse de 35 à 80°C et un indice d'acide < 5 mg KOH/g, le polyester I.1 étant obtenu à partir d'au moins un acide dicarboxylique monomère choisi parmi l'acide isophtalique, l'acide téréphtalique, l'acide hexahydrotéréphtalique et l'acide 1,4-cyclohexanedicarboxylique,
et
au moins un polyol monomère, choisi parmi le monoéthylèneglycol, le butanediol, l'hexanediol, le néopentylglycol, le dicidol, le cyclohexanediméthanol, le triméthylolpropane et le glycérol ;
I.2) au moins un polyisocyanate ;
I.3) au moins un composé ayant au moins un groupe alcool et au moins un groupe acrylate polymérisable;
et
II. des auxiliaires et des additifs,
dans des malaxeurs chauffables, tout en respectant une limite supérieure de la température comprise entre 120 et 130°C.

12. Procédé selon la revendication 11, **caractérisé en ce qu'**on utilise en tant que matières de départ des composés selon au moins l'une des revendications 2 à 4.

13. Procédé selon de fabrication de revêtements, par utilisation de compositions de peinture en poudre durcissables sous l'effet d'un rayonnement, contenant
I. un liant, constitué
d'au moins un acrylate d'uréthanne amorphe, ayant une température de transition vitreuse d'au moins 35°C et un point de fusion de 50 à 120°C,
l'acrylate d'uréthanne amorphe étant obtenu par réaction des composés suivants :
I.1) au moins un polyester amorphe contenant des groupes hydroxyle, ayant une température de transition vitreuse de 35 à 80°C et un indice d'acide < 5 mg KOH/g, le polyester I.1 étant obtenu à partir d'au moins un acide dicarboxylique monomère choisi parmi l'acide isophtalique, l'acide téréphtalique, l'acide hexahydrotéréphtalique et l'acide 1,4-cyclohexanedicarboxylique,
et
au moins un polyol monomère, choisi parmi le monoéthylèneglycol, le butanediol, l'hexanediol, le néopentylglycol, le dicidol, le cyclohexanediméthanol, le triméthylolpropane et le glycérol ;
I.2) au moins un polyisocyanate ;
I.3) au moins un composé ayant au moins un groupe alcool et au moins un groupe acrylate polymérisable ;
et
II. des auxiliaires et des additifs.

14. Procédé selon la revendication 13, **caractérisé en ce qu'**on utilise en tant que composés de départ les composés selon au moins l'une des revendications 2 à 4.

15. Procédé selon la revendication 11 ou 12, dans des extrudeuses chauffables.
